# EUROPÄISCHE PATENTSCHRIFT

(11) **EP 0 473 883 B1**
(45) Veröffentlichungstag und Bekanntmachung des Hinweises auf die Patenterteilung: **08.06.1994**
(21) Anmeldenummer: 91108229.5
(22) Anmeldetag: 22.05.1991
(51) Int. Cl.: G01D 18/00, G05B 19/40

(54) **Anzeigevorrichtung mit Schrittmotor**
Display device with stepping motor
Dispositif d'affichage avec moteur pas-à-pas

(30) Priorität: 25.08.1990 DE 4026915
(43) Veröffentlichungstag der Anmeldung: 11.03.1992
(73) Patentinhaber: VDO Adolf Schindling AG, D-60487 Frankfurt (DE)
(72) Erfinder: Kronenberg, Klaus, W-6231 Schwalbach/Ts. (DE)
(74) Vertreter: Klein, Thomas, Dipl.-Ing. (FH)

(56) Entgegenhaltungen:
- US-A- 3 982 106
- PATENT ABSTRACTS OF JAPAN, vol. 013, no. 370 (P-920), 17. August 1989 & JP-A-01 126 506

## Beschreibung

Die Erfindung bezieht sich auf eine Anzeigevorrichtung mit Skala, Zeiger, Schrittmotor, Getriebe und Steuereinrichtung, bei der dem Gesamt-Anzeigebereich eine Vielzahl von Umdrehungen des Schrittmotors entspricht und die Steuereinrichtung ein Schrittzählwerk mit umkehrbar eindeutiger Zuordnung von Schrittzahl und Anzeigewert enthält.

Die richtige Zuordnung von Anzeigewert und Schrittzahl wird bei der Herstellung der Anzeigevorrichtung bzw. bei deren erster Inbetriebnahme überprüft und ggf. neu abgeglichen. Dieser Abgleich reicht für einen einwandfreien Betrieb nicht aus, weil die richtige Zuordnung durch die Unterbrechung der Energieversorgung oder durch die Einstrahlung elektromagnetischer Wellen gestört werden kann.

Für einen Schrittmotor mit mehreren Wicklungen hat man daher schon ein Verfahren vorgeschlagen (DE-OS 39 21 462), bei dem die in einer jeweils nicht zum Antrieb benötigten Wicklung durch eine Bewegung des Schrittmotors induzierte Spannung ausgewertet wird. Die Auswertung erfolgt in der Weise, daß der Schrittmotor bei jeder Inbetriebnahme zunächst ein Prüfprogramm durchläuft, bei dem er in eine vorgegebene Richtung bis zum Anschlag des Zeigers am Skalenende weitergeschaltet wird, was durch Ausbleiben einer induzierten Spannung beim Stehenbleiben des Schrittmotors festgestellt wird. Damit ist das Prüfprogramm beendet und das Schrittzählwerk kann auf den zugehörigen Wert eingestellt werden. Die Anzeigevorrichtung ist nun neu abgeglichen und betriebsbereit.

Mit diesem Verfahren kann ein automatischer Abgleich bei jedem Ein- und/oder Ausschalten der Anzeigevorrichtung durchgeführt werden. Es ist für viele Anwendungsfälle aber nicht brauchbar, weil die Zuordnung von Schrittzahl und Anzeigewert auch während des Betriebes gestört werden kann, beispielsweise durch eine von außen auf das Zählwerk vorrübergehend einwirkende elektromagnetische Strahlung oder durch starke mechanische Erschütterungen.

Es besteht daher die Aufgabe, für eine Anzeigevorrichtung der eingangs genannten Art eine Abgleichmöglichkeit zu schaffen, die eine Prüfung der Zuordnung während des Betriebes erlaubt und die ohne einen Anschlag-Abgleich gemäß DE-OS 39 21 462 auskommt.

Diese Aufgabe wird erfindungsgemäß mit einer Anzeigevorrichtung der eingangs genannten Art gelöst, die gekennzeichnet ist durch
a) eine mit der Welle des Zeigers drehfest verbundene Codierscheibe, die am Umfang verteilt eine Mehrzahl von Markierungen aufweist, von denen je zwei benachbarte untereinander einen Winkelabstand aufweisen, der sich von den Winkelabständen zwischen allen anderen Markierungen unterscheidet,
b) einen den Markierungen gegenüber ortsfest angeordneten Sensor mit angeschlossenem Schritt-Zählwerk sowie durch
c) eine in der Steuereinrichtung gespeicherte Tabelle von Schrittzahlen, die den Winkelabständen zwischen den Markierungen entsprechen.

Besonders vorteilhaft ist es, wenn die Markierungen auf der Codierscheibe so verteilt sind, daß dem Bereich der statistisch häufigsten Zeigerstellung die kleinren Winkelabstände zugeordnet sind. Die Markierungen können zweckmäßigerweise aus lichtdurchlässigen Schlitzen in einer lichtundurchlässigen Codierscheibe bestehen, wobei der Sensor dann als Lichtschranke ausgebildet ist.

Der Erfindungsgedanke geht davon aus, daß der Zeiger der Anzeigevorrichtung während des Betriebes vorzugsweise nicht nur eine bestimmte Position einnimmt, sondern den gesamten Anzeigebereich überstreicht, sich zumindest aber in einem Teilbereich ständig auf wechselnde Positionen einstellt.

Infolge dieses "dynamischen" Verhaltens ist es mittels des Sensorelements und der Codierscheibe möglich, laufend Rückmeldungen über die Schrittzahlen zwischen zwei aufeinanderfolgenden, durch die Markierungen im Sensor ausgelösten Signalen zu erhalten und damit ein Maß für den zuletzt durchlaufenden Winkelabstand zu gewinnen. In der Steuereinheit werden die den Winkelabständen entsprechenden Schrittzahlen mit den tabellarisch abgespeicherten Schrittzahlen verglichen. Da erfindungsgemäß jeder Winkelabstand nur einmal vorkommt und im Zählwerk durch Aufwärts- bzw. Abwärtszählen automatisch auch die Drehrichtung festgestellt wird, kann der jeweils zuletzt am Sensor vorbeistreichenden Markierung jedes durch zwei Markierungen definierten Winkelabstandes ein ganz bestimmter Winkel bzw. Anzeigewert zugeordnet und dieser mit dem Wert im Schrittzähler verglichen werden. Stimmen Anzeigewert und Schrittzahl nicht überein, wird das Schritt-Zählwerk des Schrittmotors entsprechend korrigiert. Auf diese Weise wird die Anzeigevorrichtung jedesmal neu abgeglichen, wenn eine Markierung der Codierscheibe am Sensorelement vorbeistreicht und damit einen neuen Zählvorgang auslöst. Durch die Zuordnung der kleineren Winkelabstände zwischen den Markierungen zu dem Bereich der statistisch häufigsten Zeigerstellung wird erreicht, daß ein Abgleich möglichst oft erfolgt, d.h. daß sich das Anzeigegerät während des Betriebes nahezu lückenlos selbst überprüft und abgleicht, so daß eine fehlerhafte Anzeige infolge der eingangs genannten Störungen praktisch auszuschließen ist. Die erfindungsgemäße Anzeigevorrichtung hat den weiteren Vorteil, daß für den Abgleich keine Rückstellung des Zeigers bis zum Anschlag erforderlich ist.

Die Erfindung wird anhand des in den Figuren 1 bis 3 dargestellten Ausführungsbeispiels näher erläutert.
Figur 1 zeigt den prinzipiellen Aufbau der Anzeigevorrichtung
Figur 2 zeigt die Codierscheibe
Figur 3 zeigt den Ablauf des Prüfprogrammes

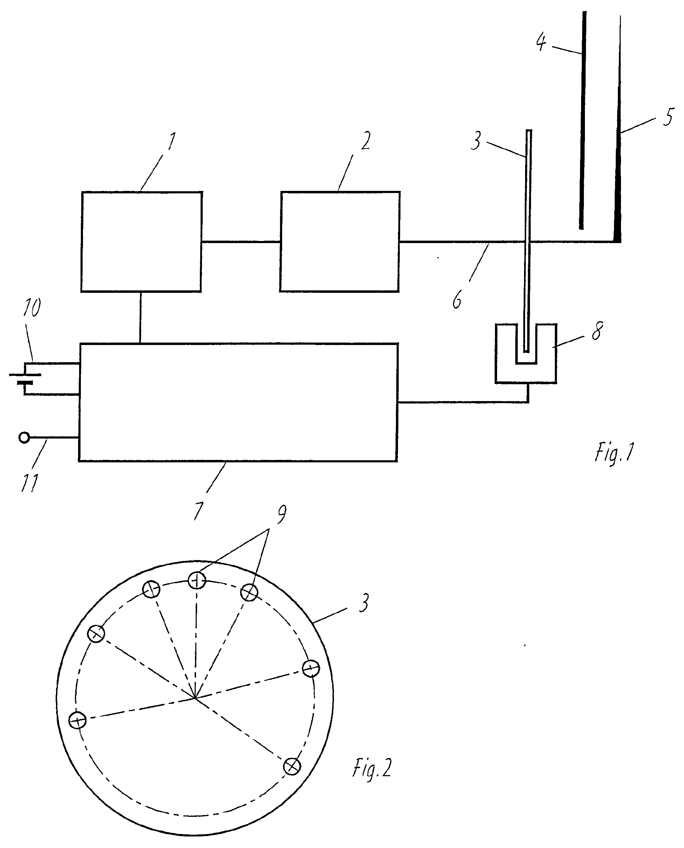

In der stark vereinfachten Darstellung nach Fig. 1 ist mit 1 ein Schrittmotor und mit 2 ein Getriebe bezeichnet, wie sie bei modernen Anzeigevorrichtungen üblich sind. Der Schrittmotor 1 wird von der Steuereinrichtung 7 angesteuert, in der das über die Leitung 11 ankommende Meßsignal aufbereitet und in einen Schrittbefehl für den Schrittmotor umgewandelt wird. Der Schrittbefehl richtet sich hinsichtlich Vorzeichen und Größe nach der Differenz zwischen augenblicklicher Zeigerstellung bzw. der zugeordneten Schrittzahl und der sich aus dem Meßsignal ergebenden Schrittzahl. Dementsprechend wird die Welle 6 des Zeigers 5 über das Getriebe 2 verdreht. Mit 4 ist die Skala im Schnitt angedeutet.

Auf der Welle 6 ist außerdem die Codierscheibe 3 drehfest angeordnet. Beim Vorbeistreichen der randseitigen Markierungen 9 (Fig. 2) am Sensor 8 wird in letzterem ein Signal erzeugt, das einen neuen Zählvorgang im angeschlossenen Schritt-Zählwerk auslöst. Das Schritt-Zählwerk ist ein Teil der Steuereinrichtung 7 und nicht gesondert dargestellt.

Die Steuereinrichtung 7 besitzt eine Energieversorgung 10 und enthält zumindest zwei Zählwerke und einen Rechner. Das vom Sensor 8 gelieferte Signal bewirkt, daß die im zugehörigen Zählwerk zu diesem Zeitpunkt vorhandene Schrittzahl mit den tabellarisch abgespeicherten Schrittzahlen (= Winkelabständen) verglichen und damit der zur signalauslösenden Markierung gehörige Winkelwert bzw. die entsprechende "richtige" Schrittzahl identifiziert wird. Diese "richtige" Schrittzahl wird mit der Schrittzahl verglichen, die im Schritt-Zählwerk des Schrittmotors steht. Solange keine Störing eingetreten ist, stimmen beide Schrittzahlen überein. Ist dies nicht der Fall, wird das Schritt-Zählwerk des Schrittmotors entsprechend korrigiert, d.h. neu abgeglichen. Damit ist dann die richtige Zuordnung von Zeigerstellung und Schrittzahl wieder hergestellt.

Aus Fig. 2 ist ersichtlich, wie die Markierungen 9 auf der Codierscheibe 3 angeordnet sind. Dargestellt sind sieben Markierungen, wobei ohne weiteres ersichtlich ist, daß die Winkelabstände zwischen zwei benachbarten Markierungen 9 alle unterschiedlich sind.

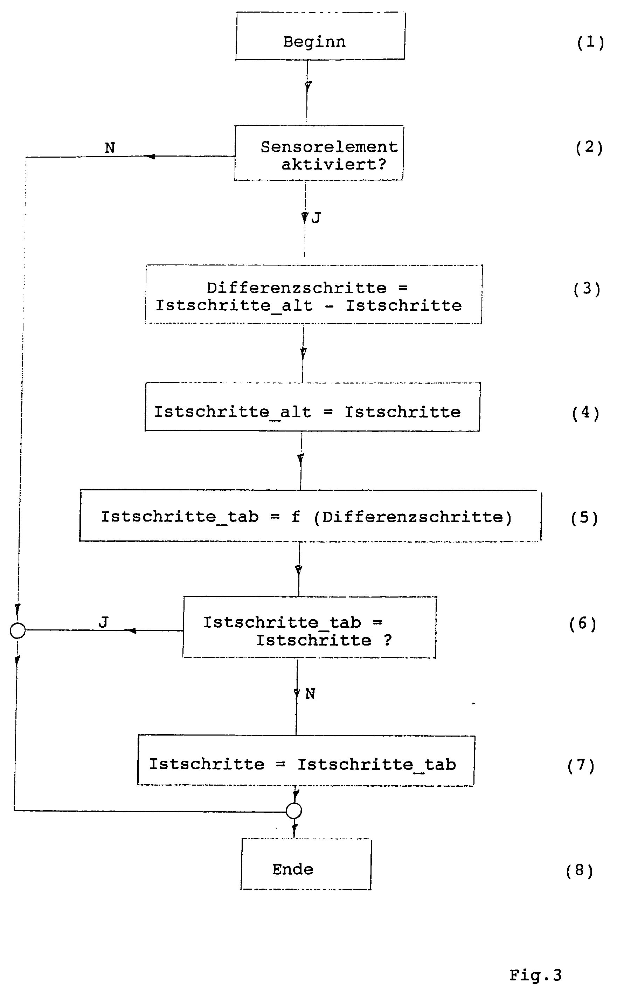

Fig. 3 schließlich zeigt ein Flußdiagramm für die Rechenvorgänge in der Steuereinrichtung 7, soweit sie den erfindungsgemäßen automatischen Abgleich während des Betriebes betreffen.

Der Anfang des Abgleichvorgangs ist mit "Beginn" (1) gekennzeichnet. Zunächst wird geprüft, ob der Sensor aktiviert ist (2), d.h. ob eine der Markierungen der Codierscheibe dem Sensor gegenübersteht. Ist das nicht der Fall, wird kein Abgleichvorgang eingeleitet. Ist der Sensor aktiviert, erfolgt eine Berechnung der Differenzschrittzahl seit der letzten Aktivierung des Sensors unter Berücksichtigung der Drehrichtung (3), d.h. es wird nicht nur die Differenzschrittzahl, sondern auch deren Vorzeichen festgestellt bzw. es wird festgestellt, ob aufwärts oder abwärts gezählt wurde. Die sich daraus ergebende Ist-Position der Codierscheibe bzw. des Zeigers wird abgespeichert (4). Anschließend wird aus der Tabelle die zur Ist-Position gehörige Referenz-Schrittzahl abgegriffen (5) und mit der aktuellen Ist-Schrittzahl verglichen (6). Bei Übereinstimmung wird zum Ende (8) des Programms fortgeschritten. Stimmen Ist-Schrittzahl und Referenz-Schrittzahl nicht überein, wird im Schrittzählwerk des Schrittmotors die Ist-Schrittzahl durch die Referenz-Schrittzahl ersetzt (7). Damit ist der Abgleichvorgang abgeschlossen und das Ende (8) des Programms erreicht.

## Patentansprüche

1. Anzeigevorrichtung mit Skala (4), Zeiger (5), Schrittmotor (1), Getriebe (2) und Steuereinrichtung (7), bei der dem Gesamt-Anzeigebereich eine Vielzahl von Umdrehungen des Schrittmotors entspricht und die Steuereinrichtung ein Schrittzählwerk mit umkehrbar eindeutiger Zuordnung von Schrittzahl und Anzeigewert enthält, gekennzeichnet durch,
a) eine mit der Welle (6) des Zeigers (5) drehfest verbundene Codierscheibe (3), die am Umfang verteilt eine Mehrzahl von Markierungen (9) aufweist, von denen je zwei benachbarte untereinander einen Winkelabstand aufweisen, der sich von den Winkelabständen zwischen allen anderen Markierungen (9) unterscheidet,
b) einen den Markierungen gegenüber ortsfest angeordneten Sensor (8) mit angeschlossenem Schritt-Zählwerk sowie durch
c) eine in der Steuereinrichtung gespeicherte Tabelle von Schrittzahlen, die den Winkelabständen zwischen den Markierungen (9) entsprechen.

2. Anzeigevorrichtung nach Anspruch 1, dadurch gekennzeichnet, daß die Markierung (9) auf der Codierscheibe (3) so verteilt sind, daß dem Bereich der statistisch häufigsten Zeigerstellung die kleineren Winkelabstände zugeordnet sind.

3. Anzeigevorrichtung nach Anspruch 1 oder 2, dadurch gekennzeichnet, daß die Markierungen (9) aus lichtdurchlässigen Schlitzen in einer lichtundurchlässigen Codierscheibe (3) bestehen und daß der Sensor (8) als Lichtschranke ausgebildet ist.

## Claims

1. An indicator apparatus with a scale (4), pointer (5), stepper motor (1), transmission (2) and controller (7), wherein a plurality of revolutions of the stepper motor corresponds to the entire indication range and the controller contains a step counting mechanism with a reversible unambiguous association of step number and indication value, characterised by
a) a code disc (3) attached rotationally fixed to the shaft (6) of the pointer (5) and which has a plurality of markings (9) distributed at its periphery, each two adjacent markings of which have an angular separation between them which differs from the angular separations of all other markings (9),
b) a sensor (8) with an attached step counting mechanism and disposed fixed in relation to the markings, and by
c) a table of step numbers stored in the controller, which step numbers correspond to the angular separations between the markings (9).

2. An indicator apparatus according to claim 1, characterised in that the markings (9) are distributed on the code disc (3) so that the smaller angular separations are associated with the region of the statistically most frequent pointer position.

3. An indicator apparatus according to claim 1 or 2, characterised in that the markings (9) consist of transparent slits in an opaque code disc (3) and that the sensor (8) is constructed as a photoelectric barrier.

## Revendications

1. Dispositif d'affichage comprenant une graduation (4), une aiguille (5), un moteur (1) pas-à-pas, une transmission (2) et un dispositif de commande (7) et dans lequel toute la plage d'affichage correspond à un certain nombre de tours du moteur et le dispositif de commande contient un compteur de pas à coordination inversable déterminée du nombre de pas et de la valeur affichée, dispositif caractérisé en ce que
a) un disque codeur (3), solidaire en rotation de l'axe (6) de l'aiguille (5), comporte sur son pourtour un certain nombre de marques (9), dont deux quelconques qui sont adjacentes présentent entre elles un écart angulaire qui est différent des écarts angulaires entre toutes les autres marques (9) ;
b) un capteur (8) à compteur de pas incorporé, est disposé à poste fixe vis-à-vis des marques (9) ; et
c) une table, mémorisée dans le dispositif de commande, contient les nombres de pas qui correspondent aux écarts angulaires entre les marques (9).

2. Dispositif d'affichage selon la revendication 1, caractérisé en ce que les marques (9) sont réparties sur le disque codeur (3) de façon que la plage des positions statistiquement les plus fréquentes de l'aiguille soit attribuée aux plus faibles écarts angulaires.

3. Dispositif d'affichage selon la revendication 1 ou 2, caractérisé en ce que les marques (9) sont des fentes transparentes d'un disque codeur (3) opaque et en ce que le capteur (8) est un circuit à cellule photoélectrique.
